# FASCICULE DE BREVET EUROPEEN

(11) **EP 0 921 545 B1**
(45) Date de publication et mention de la délivrance du brevet: **01.03.2006**
(21) Numéro de dépôt: 98410136.0
(22) Date de dépôt: 01.12.1998
(51) Int. Cl.: H01H 9/02, H02B 1/04

(54) **Dispositif de fixation d'un mécanisme d'appareil électrique dans un boitier, support de mécanisme et boitier adaptés à un tel dispositif**
Vorrichtung zur Befestigung des Mechanismus eines elektrischen Gerätes in einem Gehäuse, Halterung für den Mechanismus und an solcher Vorrichtung angepasstes Gehäuse.
Device for mounting an electrical apparatus mechanism in a casing, mechanism support and casing adapted to such a device

(30) Priorité: 02.12.1997 FR 9715505
(43) Date de publication de la demande: 09.06.1999
(73) Titulaire: SCHNEIDER ELECTRIC INDUSTRIES SAS, 92500 Rueil-Malmaison (FR)
(72) Inventeur: Wasner, Olivier, 38050 Grenoble Cédex 09 (FR); Guinebert, Patrick, 38050 Grenoble cédex 09 (FR); Buchy, Bernard, 38050 Grenoble cédex 09 (FR); Goerger, Cristophe, 38050 Grenoble cédex 09 (FR)
(74) Mandataire: Ritzenthaler, Jacques

(56) Documents cités:
- EP-A- 0 657 905
- EP-A- 0 715 382
- EP-A- 0 798 834
- US-A- 2 235 382
- US-A- 5 272 297

## Description

L'invention concerne un dispositif de fixation du mécanisme d'un appareil électrique tel un interrupteur ou une prise de courant dans un boîtier, un support de mécanisme destiné à être fixé au moyen de ce dispositif, ainsi qu'un boîtier adapté à un tel dispositif de fixation.

Certains appareils électriques tels que des interrupteurs, va-et-vient, prises de courant ou poussoirs nécessitent d'être enfermés dans des boîtiers pour des questions d'étanchéité. Ces boîtiers se composent principalement d'un corps de boîte et d'un couvercle, ledit corps de boîte comprenant une paroi de fond et quatre parois latérales. Deux des parois latérales, situées à l'opposé l'une par rapport à l'autre, comportent des moyens de passage des conducteurs destinés à être reliés au mécanisme. Un tel boîtier est décrit par exemple dans le document de brevet FR 2 716 752. Or, dans ce brevet, comme dans la plupart des boîtiers connus à ce jour, les socles de mécanisme sont fixés dans le boîtier en deux points situés respectivement au voisinage de deux parois latérales opposées du boîtier. Il en résulte que le mécanisme prend toute la largeur du boîtier, et en conséquence que le boîtier présente un espace de câblage réduit.
On connaît également le brevet FR 0 657 905, lequel comporte un socle de mécanisme fixé dans le boîtier en deux points situés respectivement au voisinage de deux parois latérales opposées du boîtier. Dans ce brevet cependant, le passage de câbles est possible entre le socle du mécanisme et la paroi latérale opposée à celle sur laquelle est fixée le socle du mécanisme. Cependant, ce passage est réduit par la présence d'un support de fixation du socle sur la paroi latérale.

La présente invention résout ces problèmes et propose un dispositif de fixation d'un mécanisme dans un boîtier offrant un espace de câblage accru de manière à faciliter le passage des conducteurs ainsi que leur raccordement, un socle de mécanisme adapté à ce dispositif, ainsi qu'un boîtier permettant la fixation d'un tel mécanisme.

A cet effet, la présente invention a pour objet un dispositif selon la revendication 1.

L'invention a également pour objet un support de mécanisme apte à être fixé dans un boîtier au moyen du dispositif précité ainsi qu'un boîtier adapté à recevoir un tel support.

Mais d'autres avantages et caractéristiques de l'invention apparaîtront mieux dans la description qui suit et se réfère aux dessins annexés donnés uniquement à titre d'exemple et dans lesquels :
- la figure 1 est une vue en perspective, illustrant le corps de boîte d'un boîtier dans lequel le mécanisme d'un interrupteur est destiné à être fixé au moyen du dispositif de l'invention,
- la figure 2 est une vue identique à la précédente illustrant le mécanisme fixé dans le boîtier,
- la figure 3 est une vue de dessus du corps de boîte logeant le mécanisme et illustrant le passage des conducteurs,
- la figure 4 est une vue en perspective du mécanisme seul,
- la figure 5 est une vue similaire à la figure 2, le mécanisme d'interrupteur étant remplacé par un mécanisme de prise de courant,
- la figure 6 est une vue en perspective du mécanisme de prise de courant seul, et
- la figure 7 est une vue en perspective éclatée illustrant un interrupteur double.

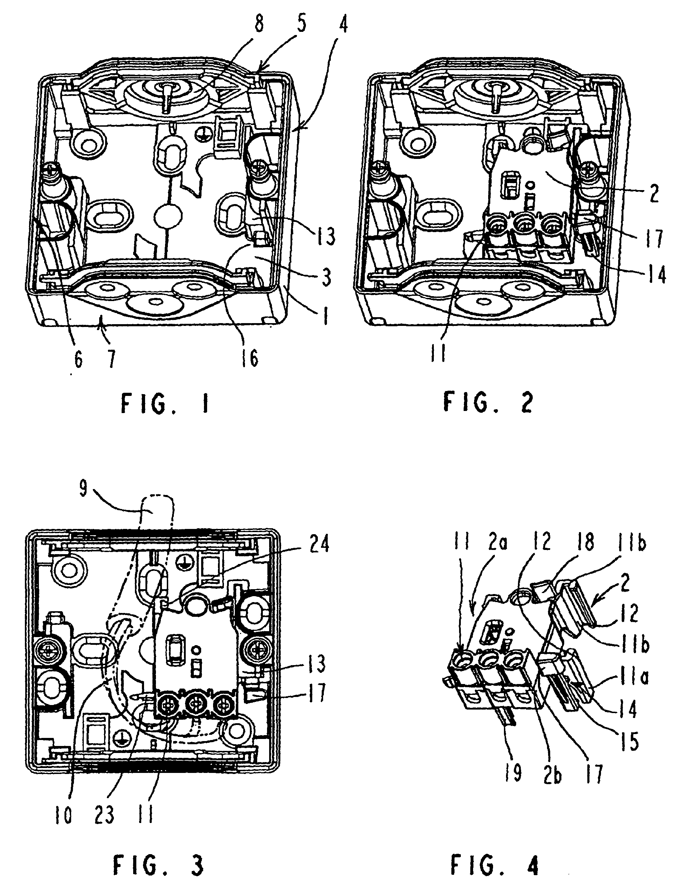

Sur les figures 1 à 3, on voit un corps de boîte 1 appartenant à un boîtier étanche destiné à loger le support 2 du mécanisme d'un interrupteur, et comprenant principalement une paroi de fond 3 et quatre parois latérales 4 à 7. Ce corps de boîte 1 est destiné à être fermé par un couvercle (non représenté) après fixation du support de mécanisme dans le boîtier. Deux 5,7 des parois latérales 4 à 7 du boîtier, opposées l'une par rapport à l'autre, sont équipées chacune d'un embout 8 amovible destiné à permettre la traversée à étanchéité d'un câble électrique 9 comportant les conducteurs 10 nécessaires à l'alimentation du mécanisme.

Sur la figure 4, on voit le support de mécanisme 2 tel qu'illustré sur la figure 2. Ce mécanisme ne relevant pas de l'invention ne sera pas décrit dans tous ses détails. Seuls seront décrits les éléments nécessaires à la compréhension de l'invention. Ce support 2 se présente sous la forme d'une boîte sensiblement parallélépipèdique, comportant sur sa face supérieure 2a, trois bornes à vis 11 destinées à être reliées aux conducteurs précités 10. Ces trois bornes 11 sont alignées, ce qui permet aux conducteurs d'être dénudés à une même longueur. Ce support 2 comporte en outre, sur l'une de ses faces latérales 2b, deux pattes 11a, 11b comportant des retours 12 et destinées à coopérer à coulissement avec deux nervures 13 de forme complémentaire solidaires du fond 3 du boîtier. Ces pattes de fixation 11a, 11b sont destinées à assurer le positionnement du mécanisme dans le boîtier et à encaisser les efforts lors du serrage des conducteurs 10 dans les bornes 11 du mécanisme. La fixation du mécanisme sur la paroi de fond 3, au voisinage de l'une 4 des parois latérales ne comportant pas d'embout 8, est réalisée au moyen d'une languette élastique 14 formant clip s'étendant parallèlement aux pattes 11, et fixée environ au milieu de sa longueur sur une face extérieure de l'une 11a des pattes. Cette languette 14 comporte, à l'une de ses extrémités, un crochet 15 apte à s'engager dans une ouverture 16 prévue dans le boîtier, lorsqu'il est exercée une déformation élastique de la languette 14 par actionnent d'un moyen de préhension 17 formé à l'extrémité de la languette 14 opposée à celle supportant le crochet 15. L'autre 11b des deux pattes comporte une zone 18 constituant une surface d'appui pour l'actionnement du moyen de préhension 17
Ainsi, le mécanisme 2 n'étant fixé que sur un seul côté du boîtier, les conducteurs 10 reliés aux mécanismes et traversant l'une des traversées étanches 8, peuvent circuler (FIG.3) librement le long du mécanisme dans l'espace e situé entre ce mécanisme et la paroi 6 du boîtier opposée à celle 4 au voisinage de laquelle est effectuée la fixation.

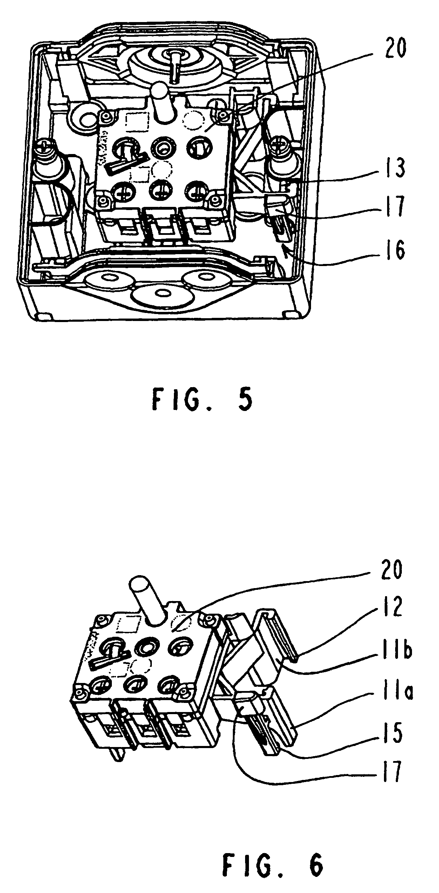

Sur la figure 4, on voit que le support de mécanisme 2 comporte un pied 19 destiné à compenser les efforts de serrage appliqués aux vis lors du raccordement des conducteurs 10. Ce dispositif pourra avantageusement être utilisé pour réaliser la fixation de mécanismes tels un interrupteur, un poussoir, un va et vient ou une prise de courant. La fixation d'une prise de courant 20, telle qu'illustrée sur la figure 6, dans un boîtier conformément à l'invention est illustrée sur la figure 5. Les éléments de fixation étant les mêmes, ces figures ne seront pas décrites de nouveau.

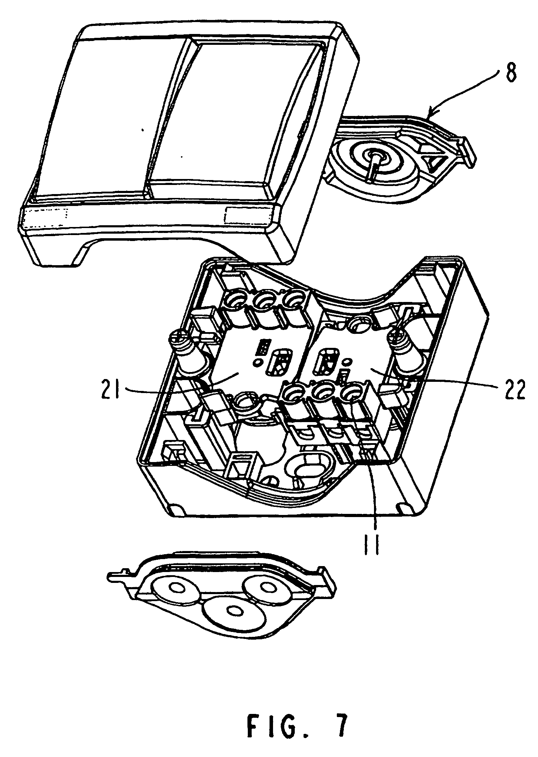

Sur la figure 7, on voit un corps de boîte 1 dans lequel sont fixés deux supports de mécanisme 21,22 disposés tête bêche. A cet effet, les éléments de fixation prévus sur le fond 3 du boîtier tels que décrits précédemment, à savoir les nervures de positionnement 13 et l'ouverture 16, sont également présents de l'autre côté du boîtier. On notera qu'avantageusement, chaque support de mécanisme sera pourvu d'un élément en saillie formant clip 23 et d'une ouverture 24, chaque élément en saillie 23 étant apte à s'engager dans une ouverture 24 ménagée dans le support de mécanisme 22 qui lui sera éventuellement juxtaposé.

On voit ainsi que grâce à l'invention, il sera possible d'utiliser un même module pour réaliser des interrupteurs simples ou doubles, lesquels seront fixés dans un boîtier standard. Dans le cas d'un interrupteur simple, les câbles pourront passer au choix sous ou à côté du mécanisme, alors que dans le cas d'un interrupteur double, ces câbles passeront sous les mécanismes. Le ou les supports pourront être désolidarisés l'un par rapport à l'autre manuellement. Le ou les supports pourront également être désolidarisés du boîtier manuellement, par une action de l'utilisateur sur les deux clips situés latéralement, l'utilisateur n'étant pas gêné par les conducteurs.

## Revendications

1. Dispositif de fixation du support de mécanisme (2) d'un appareil électrique tel un interrupteur dans un boîtier (1), ledit boîtier (1) comprenant un corps de boîte et un couvercle, le corps de boîte comprenant une paroi de fond et quatre parois latérales (6), **caractérisé en ce qu'**il comporte des moyens de fixation prévus en partie sur le support de mécanisme (2) et en partie sur seulement une des parois latérales (6) du boîtier et réalisant une fixation du mécanisme sur un seul côté du boîtier, de manière à libérer un passage (e) pour les conducteurs (10) entre ledit mécanisme (2) et la paroi latérale (6) du boîtier (1) opposée à la précédente.

2. Dispositif selon la revendication 1, **caractérisé en ce que** deux (5,7) des parois latérales du boîtier, opposées l'une par rapport à l'autre, comportant chacune une traversée (8) de conducteurs (10), le mécanisme (2) est fixé sur ou au voisinage d'une paroi latérale (4,6) ne comportant pas de traversée.

3. Dispositif selon la revendication 1 ou 2, **caractérisé en ce que** les moyens de fixation précités comprennent un crochet (15) formé à l'extrémité d'une languette (14) élastique solidaire du support du mécanisme (2), ledit crochet (15) coopérant avec une ouverture (16) prévue dans le boîtier (1) pour réaliser l'encliquetage du mécanisme (2) sur le boîtier.

4. Dispositif selon la revendication 3, **caractérisé en ce que** la languette (14) comporte à son extrémité opposée au crochet (15) un élément de préhension (17) apte à déformer la languette (14) de manière à libérer le crochet (15) de l'ouverture (16) du boîtier.

5. Dispositif selon l'une quelconque des revendications 1 à 4, **caractérisé en ce que** le support du mécanisme (2) comporte au moins une patte (11a, 11b) apte à coopérer avec au moins une nervure (13) du boîtier de manière à réaliser le positionnement du mécanisme dans le boîtier.

6. Dispositif selon la revendication 5, **caractérisé en ce que** les pattes précitées (11a, 11b) comportent des retours (12) aptes à coulisser sur les nervures précitées (13).

7. Dispositif selon les revendications 4 et 5, **caractérisé en ce que** les pattes (11a, 11b) sont au nombre de deux, et **en ce que** sur l'une (11a) des pattes est fixée la languette (14), au voisinage du milieu de sa longueur, l'autre patte (11b) comportant une zone (18) constituant une surface d'appui pour l'actionnement du moyen de préhension (17).

8. Dispositif selon l'une quelconque des revendications précédentes, **caractérisé en ce que** le support de mécanisme (2) comporte un pied (19) destiné à compenser les efforts de serrage appliqués aux vis lors du raccordement des conducteurs (10).

9. Support de mécanisme d'un appareil électrique, **caractérisé en ce qu'**il est adapté pour être fixé sur un boîtier (1) au moyen d'un dispositif selon l'une quelconque des revendications 1 à 8.

10. Support de mécanisme selon la revendication 9, **caractérisé en ce que** c'est un mécanisme d'interrupteur, de prise de courant, de poussoir ou de va et vient.

11. Support de mécanisme selon la revendication 9 ou 10, **caractérisé en ce qu'**il comporte des bornes (11) alignées de manière à permettre le dénudage des fils à une même longueur.

12. Support de mécanisme selon l'une quelconque des revendications 9 à 11, **caractérisé en ce qu'**il comporte un clip (23) et une ouverture (24) agencés de manière à permettre l'engagement du clip (23) de l'un des supports (21) dans l'ouverture (24) appartenant à un autre support (22) juxtaposé au premier dans un même boîtier (1).

13. Boîtier pour un mécanisme d'appareil électrique, **caractérisé en ce qu'**il est adapté pour la fixation d'un mécanisme au moyen d'un dispositif selon l'une quelconque des revendications 1 à 8.

14. Boîtier selon la revendication 13, **caractérisé en ce qu'**il comporte, du côté du boîtier opposé à celui de la fixation du support du mécanisme précité (21), des moyens de fixation d'un second support de mécanisme (22) identique au premier mais disposé tête bêche par rapport au premier (21) dans ce cas les câbles passeront sous les mécanismes.

## Claims

1. Device for fixing the mechanism support (2) of an electrical appliance such as a switch in a case (1), said case (1) comprising a casing body and a cover, the casing body comprising a back panel and four side panels (6), **characterized in that** it comprises fixing means provided partly on the mechanism support (2) and partly on one of the side panels (6) only of the case and performing fixing of the mechanism to one side of the case only, so as to free a passage (e) for the conductors (10) between said mechanism (2) and the side panel (6) ,of the case (1) opposite the previous one.

2. Device according to claim 1, **characterized in that** two (5, 7) of the side panels of the case, opposite one another, each comprising a bushing (8) for conductors (10), the mechanism (2) is fixed onto or near to a side panel (4, 6) not comprising a bushing.

3. Device according to claim 1 or 2, **characterized in that** the above-mentioned fixing means comprise a catch (15) formed at the end of a flexible tab (14) fixedly secured to the mechanism support (2), said catch (15) cooperating with an opening (16) provided in the case (1) to perform clipping of the mechanism (2) onto the case.

4. Device according to claim 3, **characterized in that** the tab (14), at its end opposite the catch (15), comprises a gripping element (17) designed to deform the tab (14) so as to release the catch (15) from the opening (16) of the case.

5. Device according to any one of the claims 1 to 4, **characterized in that** the mechanism support (2) comprises at least one lug (11 a, 11 b) able to cooperate with at least one rib (13) of the case so as to perform positioning of the mechanism in the case.

6. Device according to claim 5, **characterized in that** the above-mentioned lugs (11a, 11b) comprise returns (12) designed to slide on the above-mentioned ribs (13).

7. Device according to claims 4 and 5, **characterized in that** the above-mentioned lugs (11a, 11b) are two in number, and that the tab (14) is fixed onto one (11a) of the lugs, near to the middle of its length, the other lug (11 b) comprising a zone (18) forming a bearing surface for actuation of the gripping means (17).

8. Device according to any one of the foregoing claims, **characterized in that** the mechanism support (2) comprises a foot (19) designed to compensate the clamping forces applied to the screws when the conductors (10) are connected.

9. Electrical appliance mechanism support, **characterized in that** it is able to be fixed to a case (1) by means of a device according to any one of the claims 1 to 8.

10. Mechanism support according to claim 9, **characterized in that** it is a switch, current socket, push-button or two-way switch mechanism.

11. Mechanism support according to claim 9 or 10, **characterized in that** it comprises terminals (11) aligned so as to enable the wires to be bared at the same length.

12. Mechanism support according to any one of the claims 9 to 11, **characterized in that** it comprises a clip (23) and an opening (24) arranged in such a way as to enable the clip (23) of one of the supports (21) to engage in the opening (24 belonging to another support (22) juxtaposed to the first one in the same case (1).

13. Case for an electrical appliance mechanism, **characterized in that** it is suitable for fixing of a mechanism by means of a device according to any one of the claims 1 to 8.

14. Case according to claim 13, **characterized in that** it comprises, on the opposite side of the case from that of fixing of the above-mentioned mechanism support (21), means for fixing a second mechanism support (22) identical to the first one but arranged head-to-tail with respect to the first one (21), in this case the wires will run under mechanisms.

## Patentansprüche

1. Anordnung zur Befestigung des Kontaktmechanismus' (2) eines elektrischen Schaltgeräts wie z.B. eines Ein-/Aus-Schalters in einem Gehäuse (1), welches Gehäuse (1) eine Gehäusedose und einen Deckel und welche Gehäusedose eine Bodenwand und vier Seitenwände (6) umfasst, **dadurch gekennzeichnet, dass** die Anordnung teilweise am Kontaktmechanismusträger (2) und teilweise an nur einer der Seitenwände (6) des Gehäuses ausgebildete Befestigungsmittel umfasst und die Befestigung des Kontaktmechanismus' an nur einer Seite des Gehäuses erfolgt, so dass zwischen dem genannten Kontaktmechanismus (2) und der Seitenwand (6) des Gehäuses (1), die der zuvor genannten Wand gegenüberliegt, ein Durchführungsbereich e für die Leiter (10) gebildet wird.

2. Anordnung nach Anspruch 1, **dadurch gekennzeichnet, dass** an zwei (5, 7) einander gegenüberliegenden Seitenwänden des Gehäuses jeweils eine Durchführung (8) für Anschlussleiter (10) ausgebildet ist, wobei der Kontaktmechanismus (2) an oder in der Nähe einer der Seitenwände (4, 6) befestigt ist, die keine Durchführung aufweisen.

3. Anordnung nach Anspruch 1 oder 2, **dadurch gekennzeichnet, dass** die genannten Befestigungsmittel einen Haken (15) umfassen, der am Ende einer fest mit dem Träger des Kontaktmechanismus' (2) verbundenen, biegsamen Zunge (14) ausgebildet ist, welcher Haken (15) mit einer im Gehäuse (1) ausgebildeten Öffnung (16) zusammenwirkt, um die Schnappbefestigung des Kontaktmechanismus' (2) im Gehäuse zu gewährleisten.

4. Anordnung nach Anspruch 3, **dadurch gekennzeichnet, dass** die Zunge (14) an ihrem, dem Haken (15) gegenüberliegenden Ende ein Greifelement (17) aufweist, das dazu dient, die Zunge (14) so zu verformen, dass sich der Haken (15) aus der Öffnung (16) des Gehäuses löst.

5. Anordnung nach irgendeinem der Ansprüche 1 bis 4, **dadurch gekennzeichnet, dass** der Träger des Kontaktmechanismus' (2) mindestens einen Vorsprung (11a, 11b) aufweist, der dazu dient, mit mindestens einem Steg (13) des Gehäuses zusammenzuwirken, um die Positionierung des Kontaktmechanismus' im Gehäuse zu gewährleisten.

6. Anordnung nach Anspruch 5, **dadurch gekennzeichnet, dass** in den genannten Vorsprüngen (11a, 11b) Nuten (12) ausgebildet sind, die dazu dienen, auf den genannten Stegen (13) entlangzugleiten.

7. Anordnung nach Anspruch 4 und 5, **dadurch gekennzeichnet, dass** zwei Vorsprünge (11a, 11b) vorhanden sind und dass an einem (11a) der Vorsprünge, auf etwa halber Länge die Zunge (14) befestigt ist, wobei der andere Vorsprung (11b) einen Bereich (18) umfasst, der eine Angriffsfläche zur Betätigung des Greifinittels (17) bildet.

8. Anordnung nach irgendeinem der vorhergehenden Ansprüche, **dadurch gekennzeichnet, dass** der Kontaktmechanismusträger (2) einen Fuß (19) umfasst, der dazu dient, die beim Anschluss der Leiter (10) auf die Schrauben ausgeübten Klemmkräfte aufzunehmen.

9. Kontaktmechanismusträger eines elektrischen Schaltgeräts, **dadurch gekennzeichnet, dass** er dazu ausgelegt ist, mit Hilfe einer Anordnung nach irgendeinem der Ansprüche 1 bis 8 in einem Gehäuse (1) befestigt zu werden.

10. Kontaktmechanismusträger nach Anspruch 9, **dadurch gekennzeichnet, dass** es sich um einen Kontaktmechanismus eines Ein-/Aus-Schalters, einer Steckdose, eines Drucktasters oder eines Wechselschalters handelt.

11. Kontaktmechanismusträger nach Anspruch 9 oder 10, **dadurch gekennzeichnet, dass** er Klemmen (11) umfasst, die fluchtend zueinander angeordnet sind, so dass die Leiter auf die gleiche Länge abisoliert werden können.

12. Kontaktmechanismusträger nach Anspruch 9 bis 11, **dadurch gekennzeichnet, dass** er ein Schnappelement (23) und eine Öffnung (24) umfasst, die so ausgebildet sind, dass sie das Eingreifen des Schnappelements (23) eines der Träger (21) in eine Öffnung (24) eines, auf dem ersten Träger im gleichen Gehäuse (1) montierten anderen Trägers (22) erlauben.

13. Gehäuse für einen Kontaktmechanismus eines elektrischen Schaltgeräts, **dadurch gekennzeichnet, dass** es zur Befestigung eines Kontaktmechanismus' mit Hilfe einer Anordnung nach irgendeinem der Ansprüche 1 bis 8 ausgelegt ist.

14. Gehäuse nach Anspruch 13, **dadurch gekennzeichnet, dass** auf der Gehäuseseite, die der Seite gegenüberliegt, an dem der genannte Träger des Kontaktmechanismus' (21) befestigt ist, Mittel zur Befestigung eines zweiten Kontaktmechanismusträgers (22) ausgebildet sind, der mit dem ersten Träger (21) identisch, jedoch in Bezug zu diesem seitenverkehrt angeordnet ist, wobei in diesem Fall die Kabel unter den Schaltmechanismen hindurchgeführt werden.
